# EUROPEAN PATENT APPLICATION

(11) **EP 4 653 108 A1**
(43) Date of publication of application: **26.11.2025**
(21) Application number: 24382548.6
(22) Date of filing: 23.05.2024
(51) Int. Cl.: B21D 43/24, B65G 59/02

(54) **WORKPIECE SEPARATING DEVICE FOR A PRESS INSTALLATION**

(71) Applicant: FAGOR ARRASATE, S.COOP., 20500 Arrasate (ES)
(72) Inventor: SAINZ GOMEZ, Iban, 20500 Arrasate-Mondragon (ES); AGIRRETXE GALARRAGA, Oier, 20500 Arrasate-Mondragon (ES); BARRASA ARTAMENDI, Ekaitz, 20500 Arrasate-Mondragon (ES)
(74) Representative: Galbaian S.Coop.

(57) **Abstract**

The invention relates to a workpiece separating device for a press installation. The separating device comprises at least one actuating device (1) having a longitudinally movable longitudinal profile (1.0) and a head (1.1) attached to the longitudinal profile (1.0) with freedom of rotation. The head (1.1) comprises a front surface configured to contact or be in contact with a lateral side of a workpiece (200), and the head (1.1) is configured to adapt its orientation to the shape or position of said lateral side of the workpiece (200) by rotation, the orientation of the front surface being adapted. The actuating device (1) comprises a motor (3) with a motor shaft, and the head (1.1) and said motor shaft rotate together when the orientation of the front surface of said head (1.1) is changed.

## Description

### TECHNICAL FIELD

The present invention relates to workpiece separating devices for press installations.

### PRIOR ART

A press installation comprises at least one press with a lower tool and an upper tool. Workpieces are pressed or formed in the press and held between said tools.

The workpieces to be pressed are first available on a trolley or stacking unit, one on top of the other, and the installation comprises a transport device for transporting these parts one at a time to the press. The press is configured to press or form the workpieces one at a time, and if two or more workpieces arrive simultaneously the press will exert a force greater than the force for which it is configured and may be damaged. For this reason, it is important to ensure that the workpieces are destacked one at a time from the stacking unit, to ensure that no more than one workpiece reaches the press at a time.

There is a risk that in the stacking unit the different workpieces will stick together, which would result in more than one workpiece being transported to the workpiece simultaneously. To avoid this situation, it is necessary to use a workpiece separating device which is responsible for holding or supporting a single workpiece and separating it from the rest. The transport device can then pick up the single workpiece separated from the rest and transport it safely to the press.

The workpiece separating device can separate a workpiece from the rest of the workpieces and transport it to the press, but it usually has the sole function of separating the parts, so that subsequently transport means, such as a robot with suction cups for example, pick up the separated workpiece and transports it to the press or arranges it on another kind of transport system prior to the workpiece loading at the press. In general, a workpiece separating device holds or supports the workpiece until the transport device picks it up for transport.

CN115318971A discloses a workpiece separating device for a press installation, which separates a workpiece stacked in a stacking unit from other workpieces and keeps it held or supported until a transport device picks it up and arranges it on another transport to be transported to a press. The workpiece separating device comprises a plurality of actuating devices, each actuating device comprising a longitudinal profile and a head attached to the longitudinal profile with freedom of rotation. The head comprises a front surface configured to contact a lateral side of at least one workpiece to be held and separated from the other workpieces, and the head is configured to adapt its orientation to the shape or position of said workpiece by rotation, the orientation of the front surface being adapted. The workpiece separating device further comprises blocking means for blocking the rotation of the head and thus blocking the orientation of the head when required.

### DISCLOSURE OF THE INVENTION

The object of the invention is to provide a workpiece separating device for a press installation, as defined in the claims.

The workpiece separating device comprises at least one actuating device comprising a longitudinal profile and a head attached to the longitudinal profile with freedom of rotation (preferably at one end of said longitudinal profile). The head comprises a front surface for contacting a lateral side of a workpiece to be separated, and the head is configured to adapt its orientation and position with respect to said workpiece by rotation, thus adapting said front surface to said workpiece. This allows the workpiece to be kept in the correct position in order to separate it from other workpieces. The actuating device is longitudinally movable in order to be able to cooperate with the workpiece.

The actuating device comprises a motor with a motor shaft, and the head and said motor shaft rotate together when the orientation of the head is changed. As a motor cooperates for this rotation, the adaptation of the orientation can be carried out in a simple manner and using conventional elements whose robustness is also well proven, resulting in a robust, reliable and simple workpiece separating device.

In addition, the motor is a device that can be controlled as required, thus providing a more flexible workpiece separating device by having more options to modify the orientation of the front surface of the head, if desired. For example, the orientation can be changed as in the prior art, by contact with the workpiece, or it can be done by triggering the controlled rotation of the motor based on a desired orientation of the front surface, such as a reference orientation for example (without requiring contact with the workpiece).

These and other advantages and features of the invention will become apparent in view of the figures and the detailed description of the invention.

### DESCRIPTION OF THE DRAWINGS

Figure 1 shows in perspective an embodiment of the press installation according to the invention, without any press.
Figure 2 schematically shows a plant view the press installation of figure 1, including a press.
Figure 3 shows a plan view of an actuating device of an embodiment of a workpiece separating device of the invention, in contact with a workpiece.
Figure 4 shows a perspective view of a workpiece separating device of the press installation of figure 1.
Figure 5 shows an embodiment of a workpiece separating device of the invention.
Figure 6 shows another embodiment of an actuating device of the workpiece separating device of the invention.
Figure 7 shows an enlarged view of part of the actuating device of Figure 6.

### DETAILED DISCLOSURE OF THE INVENTION

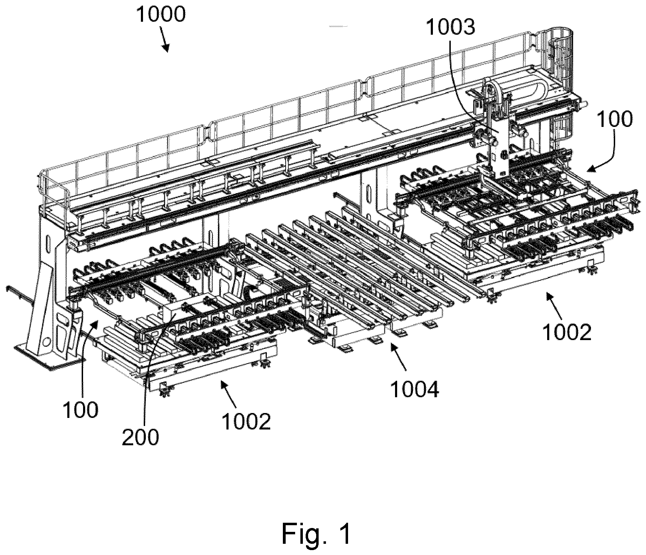

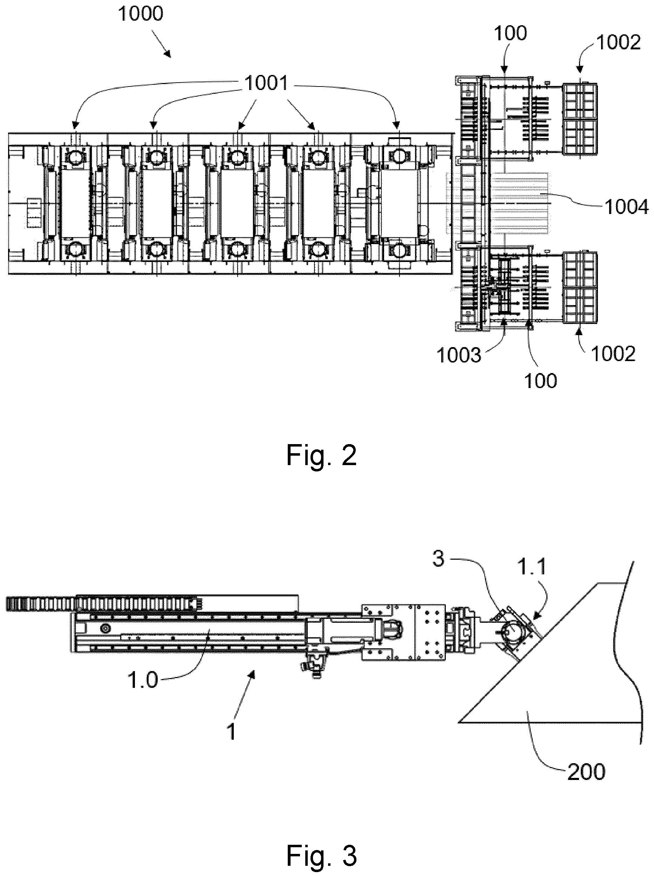

The proposed workpiece separating device 100 is adapted for being used in a press installation 1000 as the one shown in figures 1 and 2 by way of example. In a press installation 1000 a plurality of workpieces 200 are stacked on top of each other in at least one stacking unit 1002 of said press installation 1000, and the workpiece separating device 100 is adapted to separate one workpiece 200 from the rest of the workpieces 200 arranged in said stacking unit 1002, and to keep it separated, for subsequent transport. The workpiece separating device 100 separates the topmost workpiece 200 in the stacking unit 1002 (the first piece 200) and is further configured to be vertically moved to separate the next workpiece 200 which will be at a lower height than the first workpiece 200. Alternatively, or in combination, the stacking unit 1002 may be configured to keep the topmost workpiece 200 always in the same vertical position, said stacking unit 1002 being configured to lift the stack of workpieces 200 each time the workpiece separating device 100 separates one of them.

The press installation 1000 comprises at least one press 1001, at least one workpiece separating device 100 and, preferably, a transport device 1003 for transporting the workpieces 200 separated by the workpiece separating device 100 to the press 1001 (although in some embodiments said transport could be done by the workpiece separating device 100 itself). In other embodiments, such as that represented in figures 1 and 2, the press installation 1000 comprises a plurality of presses 1001 in series, two workpiece separation devices 100, a stacking unit 1002 associated with each workpiece separation device 100, and a transport device 1003 for transporting the workpieces 200 separated by the corresponding workpiece separation device 100 towards the first press 1001 (the transport device 1003 is adapted to transport workpieces 200 of both workpiece separation devices 100). The transport device 1003 arranges the workpiece 200 on a transport system 1004, from where it is fed to the press 1001 by means of a feeding device (such as a robot, for example).

The workpiece separating device 100 cooperates with a workpiece 200 of the stacking unit 1002, preferably in contact with a lateral side of said workpiece 200 (see figures 1 and 3), and separates said workpiece 200 from the rest of the workpieces 200 of the stacking unit 1002. The separation can be carried out for example using magnetic means or other known means, which are not detailed as they are not an essential part of the invention. To facilitate such separation, the workpiece separation device 100 can be kept physically separated from the workpiece 200 to avoid additional friction. The transport device 1003, in embodiments of the press installation 1000 comprising a transport device 1003, can be a robot or a transfer for example, and holds the workpiece 200 supported by the workpiece separating device 100 (with suction cups, for example), and thus holds it and transports it towards the press 1001.

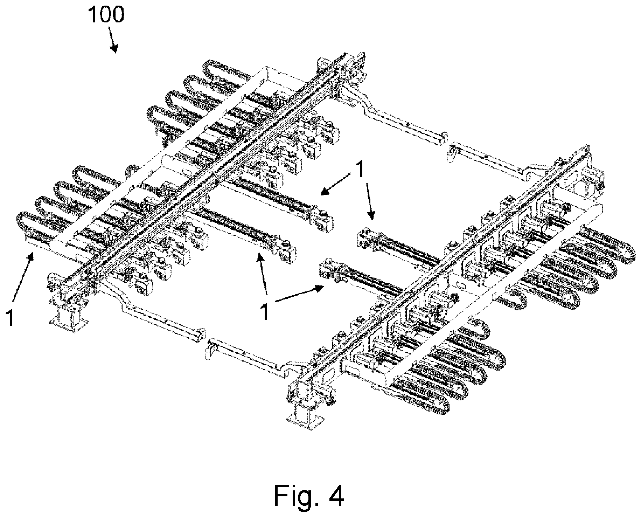

The workpiece separating device 100 comprises at least one actuating device 1 movable at least longitudinally to cooperate with at least one workpiece 200 to be separated from the rest of the workpieces 200, as previously described. In figure 1, in the workpiece separating device 100 that cooperates with a workpiece 200, due to the size of said piece 200, it has been enough with moving only two actuating devices 1 (see figure 4, that shows said workpiece separating device 100). Preferably the press installation 1000 comprises a plurality of actuating devices 1 for each lateral side of the workpiece 200 as shown in figures 1, 2 and 4, to ensure that said workpiece 200 is correctly kept in position once separated from the rest of the workpieces 200 of the same stacking unit 1002.

Preferably, in addition, the actuating device 1 can be vertically displaced to be positioned vertically at the height of the workpiece 200 to be released, as previously described.

The actuating device 1 comprises a longitudinal profile 1.0 and a head 1.1 attached to the longitudinal profile 1.0 with freedom of rotation, the head 1.1 being preferably at one end of the longitudinal profile 1.0. The head 1.1 comprises a front surface 1.11 which contacts the lateral side of the workpiece 200 to be separated. For a correct separation, the front surface 1.11 of the head 1.1 has to contact said lateral side of the workpiece 200 in a certain way, in particular it has to be oriented in the same way as said lateral side. The head 1.1 is thus configured to adapt its orientation and position with respect to said workpiece 200, by rotation, thus adapting said front surface 1.1 to said workpiece 200.

The actuating device 1 comprises a motor 3 with a motor shaft 3.1, and the head 1.1 and the motor shaft 3.1 rotate together when the orientation of the head 1.1 is changed. Thus, when the motor 3 rotates (when the motor shaft 3.1 rotates) the head 1.1 rotates, and/or vice versa.

The orientation of the head 1.1 can be caused in different ways, for example:
- By contact. The workpiece separating device 100 is moved longitudinally until the head 1.1 contacts the workpiece 200, and by further longitudinal displacement of the workpiece separating device 100, the head 1.1 is rotated (oriented) until the front surface 1.11 is aligned with the lateral side of the workpiece 200. The motor 3 is free to rotate, so that the head 1.1 rotates smoothly.
- By a vision system. For example, a top image can be taken of the workpiece 200 when it is stacked, the orientation of its lateral side is detected and the controlled rotation of the motor 3 is triggered until the head 1.1 acquires the required orientation. No contact with the workpiece 200 is required for the orientation of the head 1.1.
- By an actuation of a user. A user causes the motor 3 or the head 1.1 to rotate until the head 1.1 acquires the required orientation. No contact with the workpiece 200 is required for the orientation of the head 1.1.

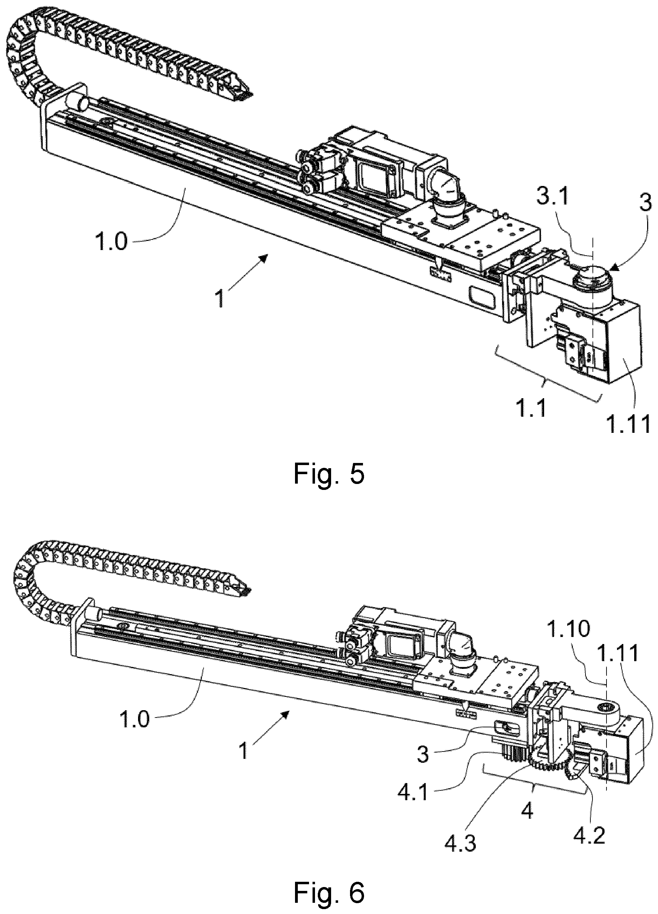

In some embodiments, such as that shown in figure 5, the motor 3 is arranged in the head 1.1. In this case the motor shaft 3.1 preferably coincides with a rotating axis 1.10 with respect to which the head 1.1 rotates with respect to the longitudinal profile 1.0.

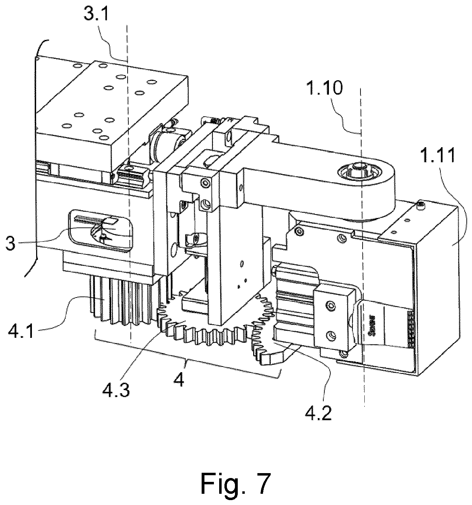

In other embodiments, as shown in figure 6, the motor 3 is arranged in the longitudinal profile 1.0, the separating device 100 comprising a transmission system 4 connected between the head 1.1 and the motor 3 for transmitting to the head 1.1 the rotation of the motor 3 (of the motor shaft 3.1). The transmission system 4 is preferably arranged under the longitudinal profile 1.0 and the head 1.1 and is represented in figure 7 in an enlarged manner with respect to figure 6.

The transmission system 4 may comprise for example a gear assembly, with a configuration as shown in figures 6 and 7 or with another configuration. The gear assembly comprises at least at least a first pinion 4.1 fixed to the motor shaft 3.1, such that the first pinion 4.1 rotates in conjunction with the motor shaft 3.1, and a second pinion 4.2 fixed to the head 1.1. Both pinions 4.1 and 4.2 are arranged in such a way that the rotation of one pinion 4.1 or 4.2 causes the rotation of the other pinion 4.1 or 4.2. In some cases, depending in particular on the distance between the arrangement of the motor 3 and the rotating axis 1.10 of the head 1.1, the gear assembly comprises at least one additional pinion 4.3 between the first pinion 4.1 and the second pinion 4.2, all the pinions 4.1, 4.2 and 4.3 cooperating with each other to transmit the rotation from the motor 3 to the head 1.1 or from the head 1.1 to the motor 3.

In the stacking unit 1002, all of the workpieces 200 generally have the same orientation, so that it is sufficient to adapt the orientation of the head 1.1 to the orientation of the first workpiece 200 to be separated. Once the orientation has been adapted, the blocking means enable this orientation to be fixed for the rest of the stacked workpieces 200, thus simplifying and speeding up the destacking of all the workpieces 200 and their transport to the press 1001.

In some embodiments, the blocking means are configured to block the rotation of the head 1.1 by acting on the motor 3:
- motor 3 may be a brake-motor, the brake-motor acting as a blocking means;
- the workpiece separating device 100 comprises a control unit (not shown in the figures) communicated with the motor 3 and configured to control the rotation of the motor 3, the control unit also acting as a blocking means; or
- the blocking means comprise a blocking element (not shown in the figures) which fixes the motor shaft 3.1, blocking the rotation of the motor 3. This blocking element may be controlled, for example, by a control unit of the workpiece separating device 100.

In other embodiments, the blocking means are configured to block the rotation of the head 1.1 by acting on the head 1.1:
- the blocking means comprise a blocking element (not shown in the figures) for blocking the rotating axis 1.10 of the head 1.1; or
- the blocking means comprise a blocking element such as a cylinder (not shown in the figures) for blocking the head 1.1.

In embodiments where the workpiece separating device 100 comprises a transmission system 4, the blocking means may be configured to block the transmission system 4.

## Claims

1. Workpiece separating device for a press installation, the separating device (100) comprising at least one longitudinally movable actuating device (1) comprising a longitudinal profile (1.0) and a head (1.1) connected to the longitudinal profile (1.0) with freedom of rotation, the head (1.1) comprising a front surface (1.11) for contacting a lateral side of a part (200) to be separated and said head (1.1) configured to adapt its orientation and position with respect to said piece (200) by rotation, said front surface (1.1) being thus adapted to said piece (200), **characterised in that** the actuating device (1) comprises a motor (3) with a motor shaft (3.1), the head (1.1) and said motor shaft (3.1) of the motor (3) rotating together when the orientation of said head (1.1) is modified.

2. Workpiece separating device according to claim 1, wherein the motor (3) is arranged in the head (1.1).

3. Workpiece separating device according to claim 2, wherein the motor shaft (3.1) of the motor (3) coincides with a rotating axis (1.10) with respect to which the head (1.1) rotates with respect to the longitudinal axis (1.0).

4. Workpiece separating device according to claim 1, wherein the motor (3) is arranged in the longitudinal profile (1.0), the workpiece separating device (100) comprising a transmission system (4) connected between the head (1.1) and the motor (3) for transmitting the rotation of the motor (3) to the head (1.1).

5. Workpiece separating device according to claim 4, wherein the transmission system (4) comprises a gear assembly.

6. Workpiece separating device according to claim 5, wherein the gear assembly comprises at least a first pinion (4.1) fixed to the motor shaft (3.1) of the motor (3) and a second pinion (4.2) which is fixed to the head (1.1), the gear assembly being configured so that said two pinions (4.1, 4.2) rotate together.

7. Workpiece separating device according to any of claims 4 to 6, wherein the transmission system (4) is arranged below the longitudinal profile (1.0) and the head (1.1).

8. Workpiece separating device according to any of claims 4 to 7, comprising blocking means for blocking the rotation of the head (1.1) and thus blocking its orientation with respect to the workpiece (200), the blocking means being configured to block the transmission system (4).

9. Workpiece separating device according to any of claims 1 to 7, comprising blocking means for blocking the rotation of the head (1.1).

10. Workpiece separating device according to claim 9, wherein the blocking means are configured to act on the motor shaft (3.1) of the motor (3) to block the rotation of the head (1.1).

11. Workpiece separating device according to claim 9 or 10, wherein the blocking means are integrated in the motor (3), said motor (3) being a brake-motor.

12. Workpiece separating device according to claim 9, wherein the blocking means are configured to act on the head (1.1) to block the rotation of the head (1.1).

13. Workpiece separating device according to any of claims 1 to 7, comprising a control unit communicated with the motor (3) and configured to control the rotation of said motor (3), said control unit also acting as a blocking means for blocking the rotation of the head (1.1).

14. Workpiece separating device according to any of claims 1 to 7, comprising a control unit communicated with the motor (3) and blocking means for blocking the rotation of the head (1.1), the blocking means comprising a blocking element controlled by the control unit for blocking the rotation of the motor shaft (3.1) of the motor (3), the blocking means thus being configured to block the rotation of the head (1.1).

15. Press installation comprising at least one press (1001), **characterised in that** it further comprises at least one workpiece separating device (100) according to any one of claims 1 to 14.
